# FASCICULE DE BREVET EUROPEEN

(11) **EP 0 787 240 B1**
(45) Date de publication et mention de la délivrance du brevet: **03.09.2003**
(21) Numéro de dépôt: 96926426.6
(22) Date de dépôt: 19.07.1996
(51) Int. Cl.: E05D 1/06, B60J 1/14

(54) **VITRAGE ENCLIQUETABLE ET MONTAGE DU VITRAGE DANS LE CADRE D'UNE BAIE**
EINRASTBARE VERGLASUNG UND MONTAGE DER VERGLASUNG IN DEM RAHMEN EINES ÖFFNUNG
SNAP-IN GLAZING AND MOUNTING THEREOF IN A WINDOW FRAME

(30) Priorité: 27.07.1995 FR 9509171
(43) Date de publication de la demande: 06.08.1997
(73) Titulaire: SAINT-GOBAIN GLASS FRANCE, 92400 Courbevoie (FR)
(72) Inventeur: BUREAU, Bernard, F-60490 Marqueglise (FR); HUCHET, Gérard, F-02600 Retheuil (FR); PROCUREUR, Patrick, F-60190 Montmartin (FR)
(74) Mandataire: Muller, René
(86) Numéro de dépôt international: FR9601134
(87) Numéro de publication internationale: WO97005355

(56) Documents cités:
- EP-A- 0 610 691
- DE-A- 2 544 220
- GB-A- 1 447 976
- N.T.I.S. TECH NOTES, Octobre 1988, SPRINGFIELD, VA US, page 879 XP000002516 MORRISON: "door opens four ways"
- PATENT ABSTRACTS OF JAPAN vol. 8, no. 64 (M-285) [1501] , 27 Mars 1984 & JP,A,58 214412 (TOUGOU SEISAKUSHO K.K.), 13 Décembre 1983,

## Description

L'invention concerne un vitrage encliquetable ouvrant par rotation dans des configurations appropriées ou, le cas échéant non ouvrant, comprenant au moins un panneau en verre et/ou en matière plastique et au moins un élément de charnière, en particulier un vitrage dont le panneau est surmoulé par une matière plastique. L'invention concerne également ce vitrage monté dans un cadre de baie ainsi que son montage.

Il existe usuellement deux types d'ouverture pour un vitrage : une ouverture par montée-baisse, c'est-à-dire par translation, et une ouverture par rotation.

L'invention concerne ce dernier type d'ouverture, c'est-à-dire que le vitrage pivote en quelque sorte autour d'un axe vertical ou horizontal. L'amplitude d'ouverture est fonction de l'application envisagée. Pour une fenêtre arrière d'un véhicule, le vitrage peut s'ouvrir, par exemple, de 1 à 6°.

Par panneau en verre et/ou en matière plastique, on comprend une feuille, par exemple en verre ou en matière plastique ou un assemblage de feuilles en verre et/ou en matière plastique. Cet assemblage peut être symétrique (les feuilles extérieures sont de même nature, en verre ou en matière plastique), ou asymétrique (les feuilles extérieures sont de nature différente, l'une en verre, l'autre en matière plastique). Ce panneau est transparent ou opaque.

Par cadre de baie, on comprend le support sur lequel est monté le vitrage. Il peut s'agir du cadre d'un véhicule de transport, par exemple une automobile ou un montant de fenêtre ou tout autre support.

Les charnières usuellement utilisées sont constituées d'un gond dans lequel tournent les pentures fixées au vitrage. Elles sont cependant inesthétiques car visibles de l'extérieur et relativement volumineuses. Par ailleurs, le montage du vitrage muni de ce type de charnière comporte des opérations malaisées telles que le positionnement des pentures dans les gonds.

Pour remédier à ces inconvénients, certaines charnières comportent un élément en un matériau élastique, ou plus précisément un matériau faisant ressort. II peut s'agir de la matière plastique surmoulant un panneau transparent et formant un sillon définissant l'axe d'articulation tel que décrit dans le document FR 2 577 856. Cependant, un défaut d'adhésion entre la charnière et le panneau peut se produire sous l'effet de fréquentes sollicitations de la matière plastique. De plus, un plissement en surface de cette dernière peut également apparaître, d'un aspect inesthétique. Ce type de charnière présente en outre un problème de sécurité car elle est facilement sectionnable par une lame coupante.

Pour remédier à ces inconvénients, le document EP O 646 483 décrit une charnière formée d'un seul élément en un matériau élastique fixé à la fois sur le panneau et sur le cadre de la baie par au moins une couche adhésive. La fixation au cadre de cet élément de charnière se fait par vissage ou boulonnage par l'intérieur, par exemple d'un véhicule, ce qui est particulièrement malaisé et source de perte de temps.

Le document EP O 096129 décrit une charnière en un seul élément, en un métal élastique qui peut se fixer au cadre de la baie par pincement. Le moyen de fixation de la charnière à la baie est, selon ce document, une pièce en forme de U possédant un ergot, la pièce venant chevaucher la périphérie du cadre de la baie tandis que l'ergot s'insère dans un trou percé au préalable dans ce cadre. Ce type de fixation nécessite cependant une forme particulière du cadre de la baie pour permettre ce chevauchement. Par ailleurs, lors de la fixation de la charnière au cadre, l'ergot risque de rayer la peinture du cadre de la baie et donc de provoquer une corrosion.

L'invention a notamment pour but de procurer un vitrage ouvrant par rotation dont la charnière soit invisible de l'extérieur tout en présentant des garanties de sécurité et dont la fixation au panneau en verre et/ou en matière plastique et au cadre de la baie soit satisfaisante.

L'invention a également pour but de proposer un vitrage dont le montage se fait essentiellement par l'extérieur et soit particulièrement simple.

Un autre but de l'invention est de proposer un vitrage ouvrant par rotation muni d'au moins un élément de charnière et de moyens d'étanchéité et/ou de maintien, prêt à la monte.

L'invention concerne un vitrage prêt à être monté dans un cadre d'une baie essentiellement par l'extérieur comprenant un panneau transparent et au moins un élément de charnière.

Selon l'invention, l'élément de charnière est conçu de telle manière que le montage du vitrage dans le cadre d'une baie s'effectue selon une approche normale par rapport à la surface délimitée par ledit cadre, puis par encliquetage dans la même direction, et l'élément de charnière comprend au moins une tige rigide et,un élément complémentaire apte à être fixé au cadre de la baie et comprenant une cavité destinée à recevoir l'extrémité de la tige et à la maintenir en son sein par pincement, par la présence d'une gorge et d'un étranglement situés l'une sur la tige, l'autre sur la paroi de la cavité.

Ainsi, selon l'invention l'ouverture ou la fermeture du panneau est provoquée par un mouvement mécanique et non élastique, ce qui assure une durabilité du vitrage ouvrant, particulièrement satisfaisante.

On comprend par tige rigide, une tige en un matériau indéformable. Sa rigidité est, par exemple, celle d'un acier demi-dur. Le matériau est du type acier ou tout métal, alliage ou matière plastique indéformable.

La tige rigide est liée au cadre de la baie par un élément complémentaire. Ce dernier comprend une cavité destinée à recevoir une extrémité de la tige rigide et à la maintenir en son sein. Il est, de préférence, lui-même fixé à la baie par pincement, une partie élastique s'appliquant contre les parois d'un orifice percé au préalable dans le cadre de la baie. Sa fixation à la baie est ainsi assurée par la partie élastique. Le maintien de la tige dans la cavité de l'élément complémentaire est obtenu par pincement. Cela peut être la mise en contact d'une partie de la tige d'appliquant contre une partie d'au moins une paroi de l'orifice percé dans le cadre de la baie tout en laissant un espace libre pour permettre le mouvement de rotation de la tige. Le pincement peut également être assuré par la présence d'au moins une gorge sur la tige et d'au moins un étranglement sur la paroi de la cavité ou vice-versa. Le maintien de la tige au sein de la cavité peut également être obtenu par une combinaison de ces moyens ou tout autre moyen dans le mesure où le mouvement de rotation de la tige au sein de la cavité est possible. La tige peut, le cas échéant, posséder d'autres degrés de liberté et notamment un autre degré de rotation.

Le matériau constituant l'élément complémentaire doit être suffisamment élastique pour permettre le passage de l'élément lors de son placement dans le trou. Ce matériau peut être du type acier formant ressort.

Les dimensions de l'élément complémentaire sont fonction des dimensions de la tige et de l'orifice percé dans la baie. Sa hauteur est légèrement supérieure à la hauteur de la tige pour permettre le mouvement de bascule tout en assurant un encombrement réduit. Elle est, par exemple, supérieure de 1 à 3 mm à la hauteur de la tige. La largeur de la partie située au travers de l'orifice est, quant à elle, légèrement inférieure au diamètre dudit orifice d'un écart inférieur ou égal à 0,2 mm.

L'extrémité opposée de la tige à celle liée au cadre de la baie est de préférence noyée, au moins partiellement, dans une matière plastique assurant, au moins en partie, l'étanchéité entre le vitrage et la baie et/ou le positionnement et le maintien du vitrage dans la baie.

Selon une variante avantageuse, cette matière plastique surmoule la périphérie du panneau en verre et/ou en matière plastique. Elle comprend, de préférence, une lèvre permettant le positionnement et le maintien du vitrage dans le cadre de la baie. Un moyen supplémentaire pour parfaire l'étanchéité entre le vitrage et le cadre de la baie au niveau de l'orifice percé dans ce cadre peut également être prévu. Il peut s'agir de rondelles de matière plastique, de l'application d'un point de colle ou tout autre moyen d'étanchéité. Ce moyen est, par exemple, situé entre la matière plastique surmoulant, au moins en partie, le panneau en verre et/ou en matière plastique et le cadre de la baie. Le matériau le constituant est, par exemple, plastique ou plastoélastique de telle sorte qu'il accompagne le mouvement de la tige lors de l'ouverture ou de la fermeture du panneau. Il présente, de préférence, en outre des propriétés adhésives vis-à-vis du matériau constituant la baie de manière à éviter tout emploi supplémentaire d'un matériau adhésif. Il s'agit, avantageusement, d'un matériau plastique, adhésif à chaud sans toutefois fluer, par exemple une mousse préimprégnée d'un matériau conférant des propriétés étanches, du type mousse en polychlorure de vinyle préimprégné ou un matériau du type caoutchouc butyle ou encore un matériau comportant un agent desséchant par exemple un mélange de polyisobutylène et de caoutchouc butyle comprenant un agent desséchant, par exemple un tamis moléculaire. Un primaire peut, éventuellement, être appliqué pour améliorer l'adhésion vis-à-vis du cadre de la baie.

Les dimensions de la tige sont choisies, de préférence, afin que l'extrémité de la tige opposée à celle liée au cadre de la baie soit noyée dans la matière plastique surmoulant le panneau. Sa hauteur totale est, par exemple, comprise entre 1,5 et 3 cm.

Selon une variante préférée de l'invention, l'élément de charnière comprend outre la tige assurant la fermeture ou l'ouverture du panneau, un moyen de fixation du panneau audit élément. Ce moyen de fixation est un moyen par pincement, ce qui évite la création de trous dans le panneau transparent, notamment lorsque celui-ci est en un matériau fragile, notamment du verre. Il s'agit, par exemple, d'un élément en forme de U, le panneau transparent venant se fixer par pincement dans la cavité du U. La tige est, par exemple, solidaire de ce moyen de fixation.

Au moins un élément de charnière peut être au moins partiellement noyé dans la matière plastique surmoulant le panneau.

Les éléments de charnière sont répartis à la périphérie du vitrage selon deux modes différents, tous deux conformes à l'invention.

Selon un premier mode, le vitrage comprend un ou plusieurs éléments de charnière positionné(s) sensiblement sur un seul de ses côtés. Il est alors possible de l'ouvrir et le fermer par rotation autour du ou des points fixes constitués par l'élément ou les éléments de charnière mis en oeuvre. Un moyen de verrouillage peut équiper le vitrage, à la partie de sa périphérie opposée à l'élément ou aux éléments de charnière. Cette variante convient notamment à des vitrages latéraux de véhicule automobile, tels qu'un déflecteur ou une vitre de custode, ouvrant par exemple par rotation selon un axe sensiblement vertical ainsi qu'à des vitres de toit de véhicule automobile.

Conformément à un second mode de réalisation de l'invention, au moins deux éléments de charnière sont positionnés sur des côtés différents du vitrage. Celui-ci devient alors non ouvrant. II va de soi que l'installation d'un vitrage fixe de ce type est particulièrement aisée, simple et rapide. Un tel vitrage constitue, de préférence, un vitrage de véhicule automobile, tel qu'un vitrage latéral, notamment de petites dimensions, un vitrage de toit ou de protection des phares.

L'invention concerne également le montage du vitrage dans un cadre d'une baie. Selon l'invention, ce montage est particulièrement simple car il se fait par l'extérieur du véhicule en enfonçant chaque extrémité d'une tige rigide dans la cavité correspondante d'un élément complémentaire. Lorsque, selon une variante préférée de l'invention, le panneau transparent est surmoulé par une matière plastique assurant l'étanchéité, le positionnement et le maintien du vitrage dans le cadre de la baie, le montage consiste à enfoncer chaque tige constituant un élément de charnière dans la cavité d'un élément complémentaire. Eventuellement le montage peut également comporter l'application d'un moyen d'étanchéité entre l'orifice percé dans le cadre de la baie et le vitrage. Quoi qu'il en soit, il n'est pas nécessaire d'appliquer une couche adhésive, de visser ou boulonner un moyen de fixation pour obtenir une fixation durable du vitrage à la baie.

D'autres avantages et caractéristiques apparaîtront dans la suite de la description dans laquelle :
- la figure 1 représente une vue de face d'un vitrage ouvert par rotation monté dans une baie selon l'invention,
- la figure 2 représente deux schémas en coupe de deux variantes de charnières selon l'invention selon l'axe I de la figure 1,
- la figure 3 représente une coupe d'un vitrage muni d'une charnière selon l'invention,
- la figure 4 représente une coupe d'un vitrage ouvrant par rotation surmoulé par une matière plastique.

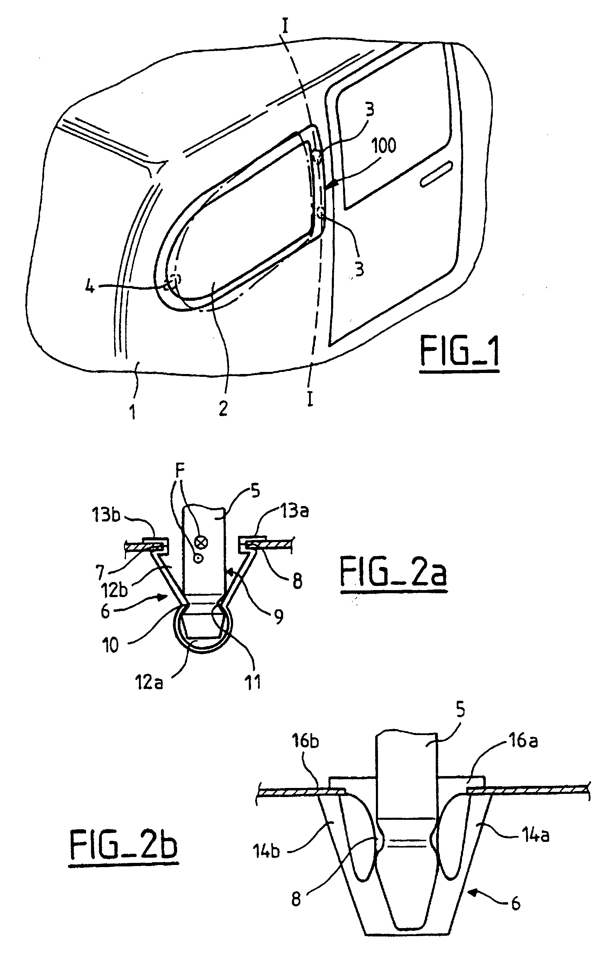

La figure 1 représente une vue de face du vitrage de l'invention monté dans un cadre d'une baie 1. Le vitrage 100 est susceptible de s'ouvrir ou de pivoter autour d'un axe d'articulation 1, ici vertical, comme représenté par les traits en pointillés. Le vitrage comprend un panneau 2 en verre et/ou en matière plastique et deux charnières 3 pour ouvrir et fermer le panneau. Le nombre de charnières 3 est fonction des dimensions du vitrage. Il est, de préférence égal à deux. Ces charnières sont représentées en périphérie du vitrage. Ce dernier peut aussi comporter un moyen de verrouillage 4 permettant à la fois de maintenir le vitrage en position ouverte ou de le verrouiller en position fermée.

La figure 2 est une coupe selon l'axe I de la figure 1. Chaque charnière 3 comprend une tige 5 dont le mouvement de rotation, schématisé par la double flèche F, provoque l'ouverture ou la fermeture du panneau 2. Cette tige est maintenue au cadre de la baie 1 par un élément complémentaire 6. Cet élément est situé sur cette figure de part et d'autre d'un orifice 7 percé au préalable dans le cadre de la baie. Il comprend une partie élastique 8 venant s'appliquer par pincement sur les parois de l'orifice 7 le fixant ainsi au cadre de la baie. Il comprend, en outre, une cavité 9 afin de maintenir la tige 5 en son sein. Cette figure comporte deux schémas représentant deux moyens de maintenir la tige dans la cavité 9 de l'élément complémentaire et deux moyens de fixer l'élément complémentaire à la baie. D'autres combinaisons de ces différents moyens peuvent être envisagées sans se départir de l'esprit de l'invention.

Selon le schéma 2a, le maintien de la tige 5 est assuré par un étranglement 10 coopérant avec une gorge 11 situés, respectivement, dans la paroi de l'orifice 7 et sur la tige 11. Un espace libre 12a et 12b permet le mouvement de la tige dans la cavité 9. La fixation de l'élément complémentaire au cadré de la baie est assurée par la partie élastique 8 s'appliquant contre les parois de l'orifice 7 ainsi que par la présence d'ailes 13a, 13b reposant sur la surface du cadre 1 adjacent à l'orifice 7 et maintenant ainsi l'élément complémentaire 6 au travers de l'orifice 7. Sur le schéma 2b, l'élément complémentaire est une rotule fixée au cadre par pincement. Le maintien de la tige dans l'orifice est assuré par la partie élastique 8. La fixation de l'élément complémentaire au cadre de la baie est assurée, selon ce schéma, à la fois par la partie 8 s'appliquant contre les parois de l'orifice 7, les bras 14a et 14b en contact avec la baie en 15a et 15b respectivement et les ailes 16a et 16b.

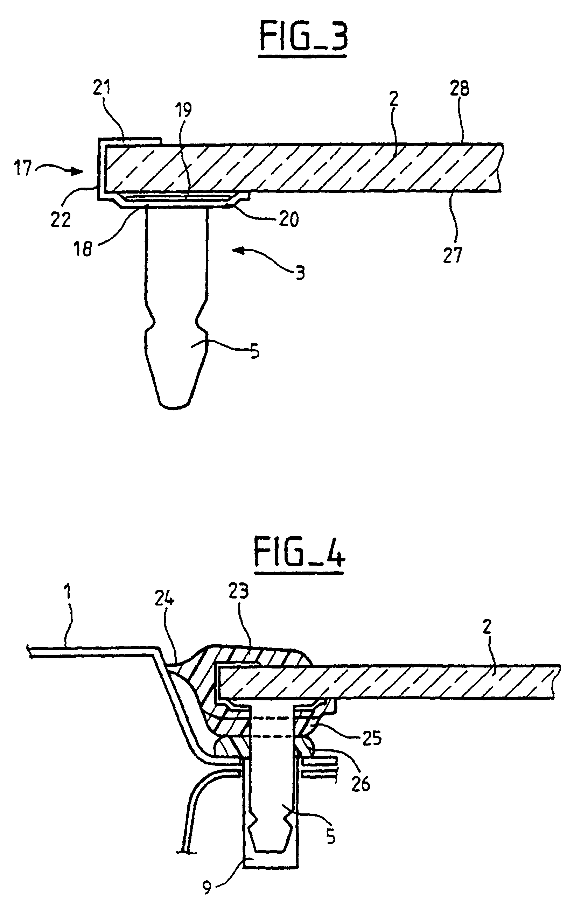

La figure 3 représente un panneau 2 selon l'invention muni d'un élément de charnière 3. Cet élément pouvant être monté selon les schémas 2a ou 2b. Il comprend un moyen de fixation 17 au panneau 2. Ce moyen de fixation est une pièce en forme de U au sein duquel vient s'insérer le panneau 2, les ailes 20 et 21 du moyen de fixation chevauchant les faces 27 et 28 respectivement du panneau 2. Selon une variante avantageuse, la fixation du panneau 2 au moyen de fixation 17 est uniquement assurée par pincement. Sur cette figure, l'extrémité 18 de la tige 5 opposée à celle liée au cadre de la baie est solidaire du moyen de fixation 17. Une surépaisseur 19, correspondant en quelque sorte à la tête de la tige, peut être présente. Les deux ailes 20 et 21 du moyen de fixation 17 peuvent être de longueur identique ou différente, la dimension intérieure de la base 22 de ce moyen 17 étant sensiblement égale à l'épaisseur du panneau 2.

La figure 4 représente une variante de l'invention selon laquelle une partie de la charnière est noyée dans une matière plastique 23 surmoulant la périphérie du panneau 2. Cette matière plastique comprend une lèvre 24 permettant le positionnement et/ou le maintien du vitrage dans le cadre de la baie 1. Une surépaisseur 25 de cette matière plastique peut avantageusement être prévue afin de bien enrober une partie de la tige 5. Par ailleurs, elle permet de régler la compression d'un moyen supplémentaire d'étanchéité 26 au moment de son application, en particulier si la matière constituant le moyen d'étanchéité 26 a tendance à fluer. Une parfaite étanchéité entre le cadre de la baie et le vitrage peut ainsi être obtenue.

L'invention concerne également un procédé de fabrication d'un vitrage selon l'invention. Ce procédé comprend les étapes suivantes :
- fixation de l'élément de charnière 3 au panneau 2 en verre et/ou en matière plastique par pincement, ledit élément 3 comprenant un moyen de fixation 17 au panneau et une tige rigide 5 dont le mouvement de rotation provoque l'ouverture ou la fermeture du panneau 2 lorsque le vitrage comprend un ou plusieurs éléments de charnière 3 positionné(s) sensiblement sur un seul de ses côtés,
- placement du panneau muni de l'élément de la charnière 3 dans un moule,
- fermeture du moule,
- injection d'une matière plastique telle qu'elle surmoule le panneau transparent en enrobant, au moins partiellement, l'élément de la charnière 3.

La charnière est invisible de l'extérieur du véhicule. Par ailleurs, sa fixation dans la baie est particulièrement simple.

## Revendications

1. Vitrage prêt à être monté dans le cadre d'une baie (1), essentiellement par l'extérieur, comprenant un panneau (2) en verre et/ou en matière plastique, éventuellement surmoulé par une matière plastique (23) et au moins un élément de charnière (3), ***caractérisé en ce* que** l'élément de charnière (3) est conçu de telle manière que le montage du vitrage dans le cadre d'une baie (1) s'effectue selon une approche normale par rapport à la surface délimitée par ledit cadre, puis par encliquetage dans la même direction, et ***en ce que*** l'élément de charnière (3) comprend au moins une tige rigide (5) et un élément complémentaire (6) apte à être fixé au cadre de la baie (1) et comprenant une cavité (9) destinée à recevoir l'extrémité de la tige (5) et à la maintenir en son sein par pincement, par la présence d'une gorge (11) et d'un étranglement (10) situés l'une sur la tige (5), l'autre sur la paroi de la cavité (9).

2. Vitrage selon la revendication 1, ***caractérisé en ce que*** l'extrémité de la tige rigide (5) opposée à celle liée à la baie est noyée au moins partiellement dans une matière plastique.

3. Vitrage selon l'une des revendications précédentes, ***caractérisé en ce que*** la matière plastique est une matière (23) surmoulant le panneau (2) en verre et/ou en matière plastique.

4. Vitrage selon l'une des revendications précédentes, ***caractérisé en ce qu'**un* moyen d'étanchéité (26) est prévu entre le cadre de la baie (1) et le vitrage.

5. Vitrage selon l'une des revendications 1 à 4, ***caractérisé en ce que*** la tige (5) est solidaire d'un moyen de fixation (17) du panneau à l'élément de charnière (3), en forme de U à l'intérieur duquel vient se fixer par pincement le panneau (2).

6. Vitrage selon l'une des revendications 1 à 5, ***caractérisé en ce que*** le panneau (2) en verre et/ou en matière plastique est surmoulé par une matière plastique (23) enrobant au moins partiellement au moins un élément de charnière.

7. Vitrage selon l'une des revendications 1 à 6, ***caractérisé en ce qu***'il comprend un ou plusieurs éléments de charnière (3) positionné(s) sensiblement sur un seul côté du vitrage, de sorte que celui-ci est susceptible d'être ouvert ou fermé par rotation.

8. Vitrage selon l'une des revendications 1 à 6, ***caractérisé en ce qu***'il comprend au moins deux éléments de charnière (3) positionnés sur des côtés différents du vitrage qui est alors non ouvrant.

9. Vitrage selon la revendication 8, constituant un vitrage latéral, de toit ou de protection des phares d'un véhicule automobile.

10. Montage d'un vitrage selon l'une des revendications 1 à 9 dans un cadre d'une baie préalablement percée d'au moins un orifice dans lequel se trouve un élément complémentaire (6) muni d'une cavité (9) destinée à recevoir et à maintenir en son sein une partie de ladite tige rigide (5), ledit montage se faisant essentiellement par l'extérieur du véhicule en enfonçant l'extrémité de la tige rigide (5) dans la cavité (9) de l'élément complémentaire (6) prévue à cet effet, selon une approche normale par rapport à la surface délimitée par ledit cadre, puis par encliquetage dans la même direction.

11. Procédé de fabrication d'un vitrage selon la revendication 1, ***caractérisé en ce qu***'il comprend les étapes suivantes :
• fixation de la tige rigide (5) d'un élément de charnière (3) au panneau (2) en verre et/ou en matière plastique par pincement dudit panneau (2) par un moyen de fixation (17) le mouvement de rotation de la tige rigide (5) par rapport à l'élément complémentaire (6) dudit élément de charnière (3) provoquant, l'ouverture ou la fermeture du panneau (2) lorsque le vitrage comprend un ou plusieurs éléments de charnière (3) positionnés) sensiblement sur un seul de ses côtés,
• placement du panneau muni de la tige rigide (5), dans un moule,
• fermeture du moule,
• injection d'une matière plastique telle qu'elle surmoule le panneau (2) transparent en enrobant, au moins partiellement, la tige rigide (5) et/ou le moyen de fixation (17).

12. Ensemble de montage d'un vitrage selon l'une des revendications 1 à 9 dans le cadre d'une baie (1) comprenant ce vitrage muni d'au moins une tige rigide (5) d'un élément de charnière (3) selon l'une des revendications 1 à 9 et un cadre équipé d'au moins un élément complémentaire (6) d'un élément de charnière (3) selon l'une des revendications 1 à 9.

## Patentansprüche

1. Verglasung, die für den Einbau in den Rahmen einer Öffnung (1) von im wesentlichen von außen gerüstet ist und welche eine Scheibe (2) aus Glas und/oder Kunststoff, auf welcher gegebenenfalls ein Kunststoff (23) aufgeformt ist, und wenigstens ein Scharnierelement (3) umfasst, **dadurch gekennzeichnet, dass** das Scharnierelement (3) derart konstruiert ist, dass der Einbau der Verglasung in den Rahmen einer Öffnung (1) mit einer in Bezug auf die von diesem Rahmen begrenzte Fläche senkrechten Annäherung und anschließend durch Einrasten in derselben Richtung erfolgt, **und dass** das Scharnierelement (3) mindestens einen starren Stab (5) und ein komplementäres Element (6) umfasst, das am Rahmen der Öffnung (1) befestigt werden kann und einen Hohlraum (9) enthält, der ein Ende des Stabes (5) aufnehmen und im Inneren durch das Vorhandensein einer Auskehlung (11) und einer Einschnürung (10), wobei sich die eine am Stab (5) und die andere in der Wand des Hohlraums (9) befindet, mittels Festklemmen festhalten soll.

2. Verglasung nach Anspruch 1, **dadurch gekennzeichnet, dass** das Ende des starren Stabes (5), das dem mit der Öffnung verbundenen gegenüber liegt, wenigstens teilweise in einen Kunststoff eingebettet ist.

3. Verglasung nach einem der vorhergehenden Ansprüche, **dadurch gekennzeichnet, dass** der Kunststoff ein Material (23) ist, das auf die Scheibe (2) aus Glas und/oder Kunststoff aufgeformt ist.

4. Verglasung nach einem der vorhergehenden Ansprüche, **dadurch gekennzeichnet, dass** zwischen dem Rahmen der Öffnung (1) und der Verglasung ein Dichtungsmittel (26) vorgesehen ist.

5. Verglasung nach einem der Ansprüche 1 bis 4, **dadurch gekennzeichnet, dass** der Stab (5) mit einem Mittel (17) fest verbunden ist, das U-förmig ist und die Scheibe am Scharnierelement (3) befestigt und in welchem die Scheibe (2) durch Festklemmen befestigt wird.

6. Verglasung nach einem der Ansprüche 1 bis 5, **dadurch gekennzeichnet, dass** auf der Scheibe (2) aus Glas und/oder Kunststoff ein Kunststoff (23) aufgeformt ist, der mindestens ein Scharnierelement wenigstens teilweise umhüllt.

7. Verglasung nach einem der Ansprüche 1 bis 6, **dadurch gekennzeichnet, dass** sie ein oder mehrere Scharnierelemente (3) umfasst, das/die im Wesentlichen auf einer einzigen Seite der Verglasung derart angeordnet ist/sind, dass diese durch Drehung geöffnet oder geschlossen werden kann.

8. Verglasung nach einem der Ansprüche 1 bis 6, **dadurch gekennzeichnet, dass** sie mindestens zwei Scharnierelemente (3) umfasst, die auf verschiedenen Seiten der Verglasung angeordnet sind, die sich dann nicht mehr öffnen läßt.

9. Verglasung nach Anspruch 8, die eine Seitenscheibe, ein Schiebedach oder die Schutzverglasung von Scheinwerfern eines Kraftfahrzeugs bildet.

10. Einbau einer Verglasung nach einem der Ansprüche 1 bis 9 in einen Rahmen einer Karosserie, die zuvor mit mindestens einer Öffnung durchbohrt worden ist, in welcher sich ein komplementäres Element (6) befindet, das mit einem Hohlraum (9) versehen ist, der bestimmt ist, einen Teil des starren Stabes (5) aufzunehmen und im Inneren festzuhalten, wobei der Einbau im Wesentlichen von der Außenseite des Fahrzeugs, indem ein Ende des starren Stabes (5) in den Hohlraum (9) des komplementären Elements (6), der zu diesem Zweck vorgesehen ist, mit einer in Bezug auf die von dem Rahmen begrenzte Fläche senkrechten Annäherung gedrückt wird, und anschließend durch Einrasten in derselben Richtung erfolgt.

11. Verfahren zur Herstellung einer Verglasung nach Anspruch 1, **dadurch gekennzeichnet, dass** es die Stufen:
- Befestigen des starren Stabes (5) eines Scharnierelements (3) an der Scheibe (2) aus Glas und/oder Kunststoff durch Festklemmen der Scheibe (2) mittels eines Befestigungsmittels (17), wobei die Drehbewegung des starren Stabes (5) in Bezug auf das zum Scharnierelement (3) komplementäre Element (6) das Öffnen oder Schließen der Scheibe (2) bewirkt, wenn die Verglasung ein oder mehrere Scharnierelemente (3) umfasst, das/die im Wesentlichen auf einer einzigen Seite von ihr angeordnet ist/sind,
- Anordnen der mit dem starren Stab (5) versehenen Scheibe in einer Form,
- Verschließen der Form und
- Spritzgießen eines Kunststoffs derart, dass er die transparente Scheibe (2) aufformt, wobei er den starren Stab (5) und/oder das Befestigungsmittel (17) wenigstens teilweise umhüllt,
umfasst.

12. Satz zum Einbauen einer Verglasung nach einem der Ansprüche 1 bis 9 in den Rahmen einer Öffnung (1), welcher diese Verglasung, die mit mindestens einem starren Stab (5) eines Scharnierelements (3) nach einem der Ansprüche 1 bis 9 versehen ist, und einen Rahmen, der mit mindestens einem zu einem Scharnierelement (3) nach einem der Ansprüche 1 bis 9 komplementären Element (6) ausgestattet ist, umfasst.

## Claims

1. Glazing unit ready to be mounted in the frame of a window bay (1), essentially from the outside, comprising a glass and/or plastic panel (2), possibly overmoulded by a plastic material (23), and at least one hinge element (3), **characterised in that** the hinge element (3) is designed in such a way that the mounting of the glazing unit in the frame of a window bay (1) is performed according to a normal approach with respect to the surface delimited by said frame, and then by latching in the same direction, and **in that** the hinge element (3) comprises at least one rigid rod (5) and a complementary element (6) capable of being fixed to the frame of the window bay (1) and comprising a cavity (9) intended to receive the end of the rod (5) and to hold it inside itself by gripping, through the presence of a groove (11) and a constriction (10) situated, one on the rod (5), the other on the wall of the cavity (9).

2. Glazing unit according to Claim 1, **characterised in that** the end of the rigid rod (5) opposite to the one connected to the window bay is embedded at least partially in a plastic material.

3. Glazing unit according to either of the preceding claims, **characterised in that** the plastic material is a material (23) overmoulding the glass and/or plastic panel (2).

4. Glazing unit according to one of the preceding claims, **characterised in that** a sealing means (26) is provided between the frame of the window bay (1) and the glazing unit.

5. Glazing unit according to one of Claims 1 to 4, **characterised in that** the rod (5) is attached to a means (17) of fixing the panel to the hinge element (3), in the shape of a U inside which the panel (2) is fixed by gripping.

6. Glazing unit according to one of Claims 1 to 5, **characterised in that** the glass and/or plastic panel (2) is overmoulded by a plastic material (23) at least partially coating at least one hinge element.

7. Glazing unit according to one of Claims 1 to 6, **characterised in that** it comprises one or more hinge elements (3) positioned substantially on only one side of the glazing unit, so that the latter is capable of being opened or closed by rotation.

8. Glazing unit according to one of Claims 1 to 6, **characterised in that** it comprises at least two hinge elements (3) positioned on different sides of the glazing unit which is then non-opening.

9. Glazing unit according to Claim 8, constituting a side or roof glazing unit or one for protecting the headlamps of a motor vehicle.

10. Mounting of a glazing unit according to one of Claims 1 to 9 in a frame of a window bay in which there has previously been made at least one orifice in which there is situated a complementary element (6) provided with a cavity (9) intended to receive and hold inside itself part of said rigid rod (5), said mounting being carried out essentially from the outside of the vehicle by pushing the end of the rigid rod (5) into the cavity (9) of the complementary element (6) provided for that purpose, according to a normal approach with respect to the surface delimited by said frame, and then by latching in the same direction.

11. Method of manufacturing a glazing unit according to Claim 1, **characterised in that** it comprises the following steps:
• fixing the rigid rod (5) of a hinge element (3) to the glass and/or plastic panel (2) by gripping of said panel (2) by a fixing means (17), the rotational movement of the rigid rod (5) with respect to the complementary element (6) of said hinge element (3) causing the opening or closing of the panel (2) when the glazing unit comprises one or more hinge elements (3) positioned substantially on only one of its sides;
• placing the panel provided with the rigid rod (5) in a mould;
• closing the mould;
• injecting a plastic material so that it overmoulds the transparent panel (2) by coating, at least partially, the rigid rod (5) and/or the fixing means (17).

12. Assembly for mounting a glazing unit according to one of Claims 1 to 9 in the frame of a window bay (1), comprising said glazing unit provided with at least one rigid rod (5) of a hinge element (3) according to one of Claims 1 to 9 and a frame equipped with at least one complementary element (6) of a hinge element (3) according to one of Claims 1 to 9.
